# EUROPEAN PATENT SPECIFICATION

(11) **EP 0 540 637 B1**
(45) Date of publication and mention of the grant of the patent: **17.11.1999**
(21) Application number: 91914036.8
(22) Date of filing: 26.07.1991
(51) Int. Cl.: B32B 27/06

(54) **IMPROVEMENTS IN OR RELATING TO LAMINATES AND PACKAGING MATERIALS**
VERBUNDSTOFFE UND VERPACKUNGSMATERIALIEN
STRATIFIES ET MATERIAUX DE CONDITIONNEMENT AMELIORES

(30) Priority: 26.07.1990 GB 9016440
(43) Date of publication of application: 12.05.1993
(60) Divisional application: 99107079.8
(73) Proprietor: ELOPAK SYSTEMS AG, CH-8152 Glattbrugg (CH)
(72) Inventor: FLOM, Atle, CH-8808 Pfäffikon (CH)
(74) Representative: Burrows, Anthony Gregory
(86) International application number: GB9101261
(87) International publication number: WO9201558

(56) References cited:
- EP-A- 0 096 581
- EP-A- 0 174 198
- EP-A- 0 215 630
- EP-A- 0 318 771
- FR-A- 2 618 726
- GB-A- 1 518 302

## Description

This invention relates to laminates and packaging materials.

A wide variety of packaging materials is known. Many are in the form of laminates in order that the material may have a desired combination of properties not available from a single layer of a single composition.

For packaging cartons, known laminates generally comprise one stiffening layer, often paperboard, which also reliably retains scores and folds therein.

A conventional packaging laminate comprises, progressing inwards, an external layer of LDPE (low density polyethylene), a paperboard layer, and an internal layer of LDPE. The LDPE layers are relatively good barriers to moisture migration and provide relatively good liquid-tight seals when heat-sealed during forming of the carton.

Another conventional laminate comprises an external layer of LDPE, a paperboard layer, a further layer of LDPE, a layer of aluminium foil. and an internal layer of LDPE. The further layer of LDPE provides a relatively good bond between the foil and the paperboard. The foil provides a good barrier to O₂ and light, so that this laminate is used particularly when the contents of the carton would otherwise be deleteriously affected by migration of substances, for example 0₂, either inwards or outwards or by light. However, such foil has a number of disadvantages, for example it is relatively brittle and thus relatively liable to break during feeding, scoring and folding. Moreover, owing to its relatively smooth surface, it in relatively difficult to bond to LDPE or other polymers. Moreover, the further layer of LDPE allows significant O₂ penetration at the sealed seams and through defects, such as pinholes or cracks, in the foil.

Various alternatives have therefore been proposed.

One such alternative is disclosed in EP-A-0124772, in which the foil is replaced by a foil consisting of an oriented plastics film, e.g. of polyester, PP (polypropylene), or PA (polyamide), with aluminium vapour-deposited upon that surface of the film facing towards the inside. The latter foil has the advantage of providing a relatively good barrier to O₂ and of being strong without being brittle. However, an LDPE layer is again used to bond the plastics film to the paperboard, so that O₂ penetration again occurs. A disadvantage of having the metallized surface of the foil facing towards the inside of the carton is that it is liable to become damaged by the heat of the seam-sealing, so reducing the O₂ barrier effect of that foil.

EP-A-0341937 discloses a range of laminates which basically comprise an external layer of LDPE, a paperboard substrate, a barrier layer preferably of aluminium foil, and at least one caulking layer of e.g. "SURLYN" adjacent to the foil, usually with an abuse-resistant layer. This range of laminates appears to be an attempt to counteract the brittleness of the foil by caulking any fractures which occur. However, not only does "SURLYN" have a relatively low resistance to 0₂ penetration, but also the minimum number of layers shown is eight and the maximum twelve, so that the laminate would be relatively expensive and difficult to produce.

EP-A-0318771 discloses a liquid-packaging laminate which comprises an external thermoplastics layer, a stiffening board layer, an EVOH layer, an aluminium foil layer, and an internal thermoplastics layer. A moisture-permeable layer, for example of "NYLON", may be included between the board layer and the EVOH layer.

EP-A-0174198 discloses a liquid-packaging laminate comprised of an external layer of paper, or plastics such as polyamide, polyethylene, polypropylene or polyester, a polyolefin layer of for example polyethylene, polypropylene or EVA, an aluminium foil layer, and an internal polyester layer.

EP-A-0215630 discloses a liquid-packaging laminate comprising an external PETG layer, a paperboard layer, an adhesive layer, a layer of PET, aluminium foil, PVDC, EVOH or NYLON, and an internal PETG layer.

EP-A-0096581 discloses a wide variety of examples of laminates, but each of several layers and including an external polypropylene or polyamide film layer, with an aluminium layer vacuum-deposited either directly on the inner surface of the film or on a gold coating on that inner surface.

Other alternatives are disclosed in US-A-4701360; EP-A-0237235 and WO-89/12406.

According to a first aspect of the present invention, there is provided a laminate comprising first and second layers which serve to stiffen the laminate, and a third layer intermediate the first and second layers and by way of which the first and second layers are tied together, the second layer serving also as a good barrier to migration of any one of the group consisting of moisture, water vapour, gases such as CO₂, O₂ or N₂, essential oils, flavour and aroma compounds, perfumes and volatile compounds, and the third layer serving also as a good barrier to O₂ migration compared to polyethylene, characterized in that said first layer comprises one or more of foamed plastics, expanded plastics, board, artificial-fibre-based material, corrugated paper, plastics material, polymer-based material, metallized material, non-metallic surface-coated material, wood, leather, plastics profiles, layer with windows for inspection and display of contents, layer with perforations, holes or other features for opening, pouring, folding, ventilating, and said second layer comprises surface-coated polymer or greaseproof paper, and in that the laminate does not include any metal foil layer.

According to a second aspect of the present invention, there is provided a packaging container comprised of a laminate comprising inner and outer layers which serve to stiffen the laminate, and an intermediate layer intermediate the inner and outer layers and by way of which the inner and outer layers are tied together, the inner layer serving also as a good barrier to migration of any one of the group consisting of moisture, water vapour, gases such as CO₂, O₂ or N₂, essential oils, flavour and aroma compounds, perfumes and volatile compounds, and the intermediate layer serving also as a good barrier to O₂ migration compared to polyethylene, characterized in that said outer layer comprises one or more of foamed plastics, expanded plastics, board, artificial-fibre-based material, corrugated paper, plastics material, polymer-based material, metallized material, non-metallic surface-coated material, wood, leather, plastics profiles, layer with windows for inspection and display of contents, layer with perforations, holes or other features for opening, pouring, folding, ventilating, and said inner layer comprises surface-coated polymer or greaseproof paper, and in that the laminate does not include any metal foil layer.

Owing to these aspects of the invention, the laminate not only has a relatively high stiffness but also provides a relatively high barrier to O₂ migration.

The first or outer layer may comprise paperboard, stiff plastics, plastics sheet, foamed plastics, kraft paper, greaseproof paper, coated film, plastics foil or metallized plastics foil.

Any one or more of the layers may constitute a barrier to light or to migration of moisture, water vapour, gases such as C0₂, 0₂, or N₂, essential oils, flavour or aroma compounds, perfumes, or volatile compounds and/or may contain scavenging material, particularly 0₂ - scavenging material. The barrier material may incorporate additives to obtain particular properties, such as pigments to obtain protection against light, and/or be any suitable PO, such as PE, barrier films such as EVOH, metallized plastics, PA, metal foil, greaseproof paper, or coated films.

Externally of the first and/or second layer(s) may be one or more further layers having barrier, scavenging, protective and/or sealing properties. The barrier property can be provided by any of the barrier materials listed in the preceding paragraph. The protective property can be provided by PE (against abrasion). The sealing property can be provided by PE and/or other sealing polymers.

The laminate is particularly suitable for packaging purposes, especially the packaging of food and other products sensitive to migration through package walls and/or intended to be of a long-life character. Among the packages for which it is especially useful are gable-topped and flat-topped cartons.

In one preferred version of the laminate, a polymer which constitutes a relatively good barrier to 0₂ migration, e.g. EVOH or a PA (such as a MXD6), forms the third layer and the first layer is formed by a paperboard, stiffening layer onto which the EVOH or PA is extruded directly or indirectly. Thereafter, a material having both stiffening and 0₂ barrier properties, such as M-PET, G-PET, M-OPP, G-OPP,or M-EVOH, or greaseproof paper, as the second layer, is laid onto the third layer, thereby itself to provide a further barrier to 0₂ migration and also to protect the third layer against heat utilized during subsequent heat-sealing of carton blanks, for example. Where the second layer is a material with a coating at one of its surfaces, for example M-PET, G-PET, M-OPP, G-OPP, or M-EVOH, the coated surface is directed towards the third layer, thereby to protect the surface coating itself against such heat. Greaseproof paper has the advantage over M-PET, G-PET, M-OPP, G-OPP and M-EVOH, that it is cheaper for the same stiffness. Upon the outside of the second layer is extruded directly or indirectly a moisture barrier layer such as PE, which protects against moisture the second and third layers, which in the case of greaseproof paper, does not constitute a barrier to moisture, and, in the case of EVOH or PA, have their 0₂ barrier properties decreased by moisture. The third layer, in the case of EVOH or PA, is much less liable to crack on scoring or folding than is the second layer in the case of greaseproof paper or the metal or glass coating in the case of M-PET, G-PET, M-OPP, G-OPP, or M-EVOH, and thus is much better able to maintain the 0₂ barrier property of the laminate during subsequent conversion of the laminate into a carton.

If the first layer is semibleached multilayer paperboard and the second layer is unbleached greaseproof paper, the laminate gives very good protection against light.

The 0₂ barrier effect of EVOH or PA combined with M-PET, G-PET, M-OPP, G-OPP, M-EVOH or greaseproof paper appears to be overall greater than the simple sum of their individual 0₂ barrier effects.

On the outside of the paperboard layer is a layer of a material, such as PE, constituting a moisture-barrier and heat-sealing material.

The EVOH or PA can be applied as a monolayer or as a co-extrusion with other plastics material; it is preferably attached to at least the second layer by means of a the layer. It is advantageous if the EVOH or PA is applied to the M-PET, G-PET, M-OPP, G-OPP or greaseproof paper in a molten state, since it thereby fills the pores in the coated surface or the greaseproof paper surface and thus increases the combined O₂ barrier effect of those two layers.

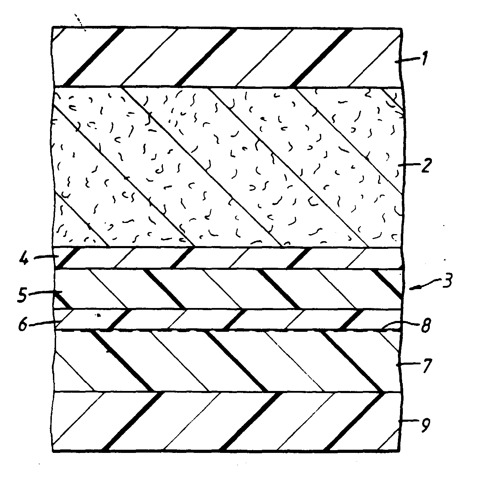

In a container made from the laminate, the layers are preferably arranged as shown in the single Figure of the accompanying drawing, which is a fragmentary cross-section through a packaging laminate. The layer arrangement is as follows, progressing inwards:-
(a) a moisture-barrier and heat-sealing layer 1 (10 to 30 g/m² LDPE)
(b) a paperboard stiffening layer 2 (150 to 400 g/m² board)
(c) O₂ barrier polymer 3, such as EVOH or polyamide (3 microns to 15 microns, preferably 3 microns to 7 microns); for example in the form "thin tie layer (4)/EVOH or PA (5)/thin tie layer (6)"
(d) M-PET, G-PET, M-OPP, G-OPP 7 (6 microns to 25 microns, preferably 9 microns to 14 microns) with its coated surface 8 directed outwards, or greaseproof paper (25 to 100 g/m²)
(e) a moisture-barrier and heat-sealing layer 9 (10 to 70 g/m² LDPE).

The surfaces of the various layers may be treated, for example flame or corona-discharge-treated, to enhance adhesion or sealability.

A particular example of this preferred version is now given:

### Example I

230g/m² of Duplex board is flame-treated on both sides and extrusion coated on its outside with a layer of 14g/m² LDPE. The resulting laminate is flipped over, then the inside of the Duplex board is brought face-to-face with the outside of a layer of greaseproof paper (50g/m²) in a laminating station of an extrusion coating line and between them there is co-extruded a three-layer structure consisting of an outside layer of LDPE (20g./m².), an intermediate tie layer ("BYNEL" 5g/m²), and an inside layer of EVOH (7g/m²). The resulting laminate then has a layer of LDPE (35g/m².) extrusion-coated onto its inside.

The final laminate has a greatly improved O₂ barrier effect and a greatly improved tolerance of abuse compared with using the same thickness of EVOH or greaseproof paper as the single barrier layer.

In another preferred version of the laminate, the first layer is formed by paperboard and the second layer is formed by metallized or glass-coated barrier plastics, e.g. aluminium metallized EVOH film, with the third layer being PE or a suitable tie tying the aluminium-coated surface of the film to the paperboard. Again, the innermost and outermost layers of the laminate are of a moisture-barrier and heat-sealing material, such as PE.

In a container made from the laminate, the layers are preferably arranged as follows, progressing inwards:-
(a) a moisture-barrier and heat-sealing layer (10 to 30 g/m² LDPE)
(b) a paperboard stiffening layer (150 to 400 g/m² Duplex)
(c) polyethylene or tie (10 to 50g g/m² LDPE)
(d) aluminium-metallized material, such as aluminium-metallized greaseproof paper, or polymer film, for example Cellophane film or EVOH film (7 microns to 20 microns)
(e) a moisture-barrier and heat-sealing layer (10 to 70 g/m² LDPE).

A particular example of this preferred version is now given:

### Example II

230g/m² of Duplex board is flame-treated on both sides and extrusion-coated on its outside with a layer of 14g/m² LDPE. The resulting laminate is flipped over, then the inside of the Duplex board is brought face-to-face with the metallized surface of the metallised EVOH film (12 microns) in a laminating station of an extrusion coating line and between them there is co-extruded a two-layer structure consisting of an outer layer of LDPE (25g/m²) and an inner tie layer ("SURLYN", 5g/m²). The resulting laminate is then co-extrusion coated with an outer tie layer ("BYNEL", 5g/m²) and an inner layer of LDPE (30g/m²).

The final laminate has a greater resistance to heat damage of the aluminium of the metallized EVOH film compared with a corresponding laminate with that aluminium on the inside of the film.

## Claims

1. A laminate comprising first and second layers (2,7) which serve to stiffen the laminate, and a third layer (5) intermediate the first and second layers (2,7) and by way of which the first and second layers (2,7) are tied together, the second layer (7) serving also as a good barrier to migration of any one of the group consisting of moisture, water vapour, gases such as CO₂, O₂ or N₂, essential oils, flavour and aroma compounds, perfumes and volatile compounds, and the third layer (5) serving also as a good barrier to O₂ migration compared to polyethylene, characterized in that said first layer (2) comprises one or more of foamed plastics, expanded plastics, board, artificial-fibre-based material, corrugated paper, metallized material, non-metallic surface-coated material, wood, leather, plastics profiles, layer with windows for inspection and display of contents, layer with perforations, holes or other features for opening, pouring, folding, ventilating, and said second layer (7) comprises surface-coated polymer or greaseproof paper, and in that the laminate does not include any metal foil layer.

2. A laminate according to claim 1, wherein said surface-coated polymer comprises metallized polymer.

3. A laminate according to claim 1, wherein said surface-coated polymer comprises glass-coated polymer.

4. A laminate according to claim 2 or 3, wherein said surface-coated polymer (7) comprises PET of which a surface (8) is metallized or glass-coated, or OPP of which a surface (8) is metallized or glass-coated.

5. A laminate according to any preceding claim, wherein said surface-coated polymer (7) has its coated surface (8) directed towards said first layer (2).

6. A laminate according to any preceding claim and further comprising a relatively good moisture barrier and heat-sealing layer (9) disposed to that side of said second layer (7) facing away from said third layer (5).

7. A laminate according to any preceding claim, wherein said third layer (5) comprises a polymer.

8. A laminate according to claim 7, wherein said third layer (5) comprises EVOH or PA.

9. A laminate according to claim 7 or 8, wherein said polymer of said intermediate layer (5) has been extruded or co-extruded onto said second layer (7).

10. A packaging container comprised of a laminate comprising inner and outer layers (7, 2) which serve to stiffen the laminate, and an intermediate layer (5) intermediate the inner and outer layers (7, 2) and by way of which the inner and outer layers (7, 2) are tied together, the inner layer (7) serving also as a good barrier to migration of any one of the group consisting of moisture, water vapour, gases such as CO₂, O₂ or N₂, essential oils, flavour and aroma compounds, perfumes and volatile compounds, and the intermediate layer (5) serving also as a good barrier to O₂ migration compared to polyethylene, characterized in that said outer layer (2) comprises one or more of foamed plastics, expanded plastics, board, artificial-fibre-based material, corrugated paper, plastics material, polymer-based material, metallized material, non-metallic surface-coated material, wood, leather, plastics profiles, layer with windows for inspection and display of contents, layer with perforations, holes or other features for opening, pouring, folding, ventilating, and said inner layer (7) comprises surface-coated polymer or grease-proof paper, and in that the laminate does not include any metal foil layer.

11. A container according to claim 10, wherein said surface-coated polymer comprises a metallized polymer.

12. A container according to claim 10, wherein said surface-coated polymer comprises a glass-coated polymer.

13. A container according to claim 11 or 12, wherein said surface-coated polymer (7) comprises PET of which a surface (8) is metallized or glass-coated, or OPP of which a surface (8) is metallized or glass-coated.

14. A container according to any one of claims 10 to 13, wherein the surface-coated polymer (7) has its coated surface (8) directed towards said outer layer (2).

15. A container according to any one of claims 10 to 14 and further comprising a relatively good moisture barrier and heat-sealing layer (9) disposed to the inner side of said inner layer (7).

16. A container according to any one of claims 10 to 15, wherein said intermediate layer (5) comprises a polymer.

17. A container according to claim 14, wherein said intermediate layer (5) comprises EVOH or PA.

18. A container according to claim 16 or 17, wherein said polymer of said intermediate layer (5) has been extruded or co-extruded onto said inner layer (7).

## Patentansprüche

1. Laminat, das erste und zweite Schichten (2, 7), die dazu dienen, das Laminat zu versteifen, sowie eine dritte Schicht (5) zwischen den ersten und den zweiten Schichten (2, 7) umfaßt, durch die die ersten und die zweiten Schichten (2, 7) miteinander verbunden sind, wobei die zweite Schicht (7) auch als gute Sperre gegenüber der Migration eines Elements der Gruppe dient, die aus Feuchtigkeit, Wasserdampf, Gasen, wie CO₂, O₂ oder N₂, ätherischen Ölen, Aromen und Aromastoffen, Duftstoffen und flüchtigen Verbindungen besteht, und die dritte Schicht (5) im Vergleich zu Polyethylen auch als gute Sperre gegenüber O₂-Migration dient, dadurch gekennzeichnet, daß die erste Schicht (2) ein oder mehrere Materialien aus der Gruppe umfaßt, die aus offenzelligen oder geschlossenzelligen geschäumten Kunststoffen, Karton, Material auf der Basis künstlicher Fasern, Wellpapier, metallisiertem Material, nichtmetallisch-oberflächenbeschichtetem Material, Holz, Leder, Kunststoffprofilen, Schichten mit Sichtfenstern und Inhaltsanzeigefenstern, Schichten mit Perforationen, Löchern oder anderen Merkmalen zum Öffnen, Gießen, Falten, Ventilieren besteht, und die zweite Schicht (7) oberflächenbeschichtetes Polymer oder fettbeständiges Papier umfaßt, und dadurch, daß das Laminat keine Metallfolienschicht enthält.

2. Laminat gemäß Anspruch 1, wobei das oberflächenbeschichtete Polymer ein metallisiertes Polymer umfaßt.

3. Laminat gemäß Anspruch 1, wobei das oberflächenbeschichtete Polymer ein glasbeschichtetes Polymer umfaßt.

4. Laminat gemäß Anspruch 2 oder 3, wobei das oberflächenbeschichtete Polymer (7) PET, dessen eine Oberfläche (8) metallisiert oder glasbeschichtet ist, oder OPP, dessen eine Oberfläche (8) metallisiert oder glasbeschichtet ist, umfaßt.

5. Laminat gemäß einem der vorstehenden Ansprüche, wobei die beschichtete Oberfläche (8) des oberflächenbeschichteten Polymers (7) zur ersten Schicht (2) hin gerichtet ist.

6. Laminat gemäß einem der vorstehenden Ansprüche, das weiterhin eine relativ gute Feuchtigkeitssperr- und Heißsiegelschicht (9) umfaßt, die sich auf derjenigen Seite der zweiten Schicht (7) befindet, die von der dritten Schicht (5) weg gerichtet ist.

7. Laminat gemäß einem der vorstehenden Ansprüche, wobei die dritte Schicht (5) ein Polymer umfaßt.

8. Laminat gemäß Anspruch 7, wobei die dritte Schicht (5) EVOH oder PA umfaßt.

9. Laminat gemäß Anspruch 7 oder 8, wobei das Polymer der Zwischenschicht (5) auf die zweite Schicht (7) extrudiert oder coextrudiert worden ist.

10. Verpackungsbehälter, der ein Laminat umfaßt, das innere und äußere Schichten (7, 2), die dazu dienen, das Laminat zu versteifen, sowie eine Zwischenschicht (5) zwischen den inneren und den äußeren Schichten (7, 2) umfaßt, durch die die inneren und die äußeren Schichten (7, 2) miteinander verbunden sind, wobei die innere Schicht (7) auch als gute Sperre gegenüber der Migration eines Elements der Gruppe dient, die aus Feuchtigkeit, Wasserdampf, Gasen, wie CO₂, O₂ oder N₂, ätherischen Ölen, Aromen und Aromastoffen, Duftstoffen und flüchtigen Verbindungen besteht, und die Zwischenschicht (5) im Vergleich zu Polyethylen auch als gute Sperre gegenüber O₂-Migration dient, dadurch gekennzeichnet, daß die äußere Schicht (2) ein oder mehrere Materialien aus der Gruppe umfaßt, die aus offenzelligen oder geschlossenzelligen geschäumten Kunststoffen, Karton, Material auf der Basis künstlicher Fasern, Wellpapier, Kunststoff, Material auf Polymerbasis, metallisiertem Material, nichtmetallischoberflächenbeschichtetem Material, Holz, Leder, Kunststoffprofilen, Schichten mit Sichtfenstern und Inhaltsanzeigefenstern, Schichten mit Perforationen, Löchern oder anderen Merkmalen zum Öffnen, Gießen, Falten, Ventilieren besteht, und die innere Schicht (7) oberflächenbeschichtetes Polymer oder fettbeständiges Papier umfaßt, und dadurch, daß das Laminat keine Metallfolienschicht enthält.

11. Behälter gemäß Anspruch 10, wobei das oberflächenbeschichtete Polymer ein metallisiertes Polymer umfaßt.

12. Behälter gemäß Anspruch 10, wobei das oberflächenbeschichtete Polymer ein glasbeschichtetes Folymer umfaßt.

13. Behälter gemäß Anspruch 11 oder 12, wobei das oberflächenbeschichtete Polymer (7) PET, dessen eine Oberfläche (8) metallisiert oder glasbeschichtet ist, oder OPP, dessen eine Oberfläche (8) metallisiert oder glasbeschichtet ist, umfaßt.

14. Behälter gemäß einem der Ansprüche 10 bis 13, wobei die beschichtete Oberfläche (8) des oberflächenbeschichteten Polymers (7) zur äußeren Schicht (2) hin gerichtet ist.

15. Behälter gemäß einem der Ansprüche 10 bis 14, der weiterhin eine relativ gute Feuchtigkeitssperr- und Heißsiegelschicht (9) umfaßt, die sich auf der inneren Seite der inneren Schicht (7) befindet.

16. Behälter gemäß einem der Ansprüche 10 bis 15, wobei die Zwischenschicht (5) ein Polymer umfaßt.

17. Behälter gemäß Anspruch 14, wobei die Zwischenschicht (5) EVOH oder PA umfaßt.

18. Behälter gemäß Anspruch 16 oder 17, wobei das Polymer der Zwischenschicht (5) auf die innere Schicht (7) extrudiert oder coextrudiert worden ist.

## Revendications

1. Un laminé comprenant des première et deuxième couches (2, 7), servant à rigidifier le laminé, et une troisième couche (5) intermédiaire aux première et deuxième couches (2, 7) et au moyen de laquelle les première et deuxième couches (2, 7) sont fixées ensemble, la deuxième couche (7) servant également de bonne barrière à la migration de l'un quelconque dans le groupe composé de humidité, vapeur d'eau, gaz tels que CO₂, O₂ ou N₂, des huiles essentielles, des composés de sapidité et aromatiques, des parfums et des composés volatils, et la troisième couche (5) servant également de bonne barrière à la migration de O₂ comparée à du polyéthylène, caractérisé en ce que ladite première couche (2) comprend une ou plusieurs matières plastiques à l'état alvéolaire, matières plastiques expansées, carton, matériau à base de fibres artificielles, papier ondulé, matériau métallisé, matériau à revêtement de surface non métallique, bois, cuir, profilés en matière plastique, couche avec des fenêtres pour l'inspection et affichage des contenus, couche avec des perforations, trous ou d'autres caractéristiques pour assurer l'ouverture, le versement, le pliage, la ventilation et ladite deuxième couche (7) comprend un polymère à revêtement de surface ou bien un papier sulfurisé, et en ce que le laminé ne comprend aucune couche de feuil métallique.

2. Un laminé selon la revendication 1, dans lequel ledit polymère à revêtement de surface est constitué d'un polymère métallisé.

3. Un laminé selon la revendication 1, dans lequel ledit polymère à revêtement de surface comprend un polymère à revêtement en verre.

4. Un laminé selon la revendication 2 ou 3, dans lequel ledit polymère à revêtement de surface (7) comprend du PET dont une surface (8) est métallisée ou revêtue de verre, ou bien du OPP dont une surface (8) est métallisée ou revêtue de verre.

5. Un laminé selon l'une quelconque des revendications précédentes, dans lequel ledit polymère à revêtement de surface (7) a sa surface (8) revêtue, tournée vers ladite première couche (2).

6. Un laminé selon l'une quelconque des revendications précédentes et comprenant en outre une barrière relativement bonne à l'humidité et une couche de thermoscellage (9), disposée du côté de ladite deuxième couche (7) opposée à ladite troisième couche (5).

7. Un laminé selon l'une quelconque des revendications précédentes, dans lequel ladite troisième couche (5) est constituée d'un polymère.

8. Un laminé selon la revendication 7, dans lequel ladite troisième couche (7) comprend du EVOH ou du PA.

9. Un laminé selon la revendication 7 ou 8, dans lequel ledit polymère de ladite couche intermédiaire (5) a été extrudé ou coextrudé sur ladite deuxième couche (7).

10. Un récipient d'emballage constitué d'un laminé comprenant des couches intérieure et extérieure (2, 7) servant à rigidifier le laminé, et une couche intermédiaire (5), placée en position intermédiaire des couches intérieure et extérieure (7, 2) et au moyen de laquelle les couches intérieure et extérieure (2, 7) sont fixées ensemble, la couche intérieure (7) servant également de bonne barrière à la migration de l'un quelconque dans le groupe composé de l'humidité, vapeur d'eau, gaz tels que CO₂, O₂ ou N₂, d'huiles essentielles, de composés de sapidité et aromatiques, de parfums et de composés volatils, et la couche intermédiaire (5) servant également de bonne barrière à la migration de O₂ en comparaison du polyéthylène, caractérisé en ce que ladite couche extérieure (2) est constituée d'une ou plusieurs matières plastiques à l'état alvéolaire, matières plastiques expansées, carton, matériau à base de fibres artificielles, papier ondulé, matière plastique, matériau à base de polymère, matériau métallisé, matériau à revêtement de surface non métallique, bois, cuir, profilés en matière plastique, couche avec des fenêtres pour l'inspection et l'affichage des contenus, couche avec des perforations, des trous ou d'autres caractéristiques pour assurer l'ouverture, le versement, le pliage, la ventilation, et ladite couche intérieure (7) comprend un polymère revêtu en surface constitué d'un papier sulfurisé, et en ce que le laminé ne comprend aucune couche de feuil métallique.

11. Un récipient selon la revendication 10, dans lequel ledit polymère à revêtement de surface est constitué de polymère métallisé.

12. Un laminé selon la revendication 10, dans lequel ledit polymère à revêtement de surface comprend un polymère à revêtement en verre.

13. Un récipient selon la revendication 11 ou 12, dans lequel ledit polymère (7) à revêtement de surface comprend du PET dont une surface (8) est métallisée ou revêtue de verre, ou de OPP dont une surface (8) est métallisée ou revêtue de verre.

14. Un récipient selon l'une quelconque des revendications 10 à 13, dans lequel le polymère à revêtement de surface (7) a sa surface (8) revêtue, tournée vers ladite première couche (2).

15. Un récipient selon l'une quelconque des revendications 10 à 14 et comprenant en outre une barrière relativement bonne à l'humidité et une couche de thermoscellage (9) disposée sur la face intérieure de ladite couche intérieure (7).

16. Un récipient selon l'une quelconque des revendications 10 à 15, dans lequel ladite couche intermédiaire (5) est constituée d'un polymère.

17. Un récipient selon la revendication 14, dans lequel ladite couche intermédiaire (5) est constituée de EVOH ou de PA.

18. Un récipient selon la revendication 16 ou 17, dans lequel ledit polymère de ladite couche intermédiaire (5) a été extrudé ou coextrudé sur ladite couche intérieure (7).
